# EUROPEAN PATENT SPECIFICATION

(11) **EP 2 645 771 B1**
(45) Date of publication and mention of the grant of the patent: **08.02.2017**
(21) Application number: 11852991.6
(22) Date of filing: 12.12.2011
(51) Int. Cl.: H04W 36/00, H04W 36/04, H04W 84/04

(54) **METHOD, DEVICE AND SYSTEM FOR SWITCHING NEIGHBORHOOD**
VERFAHREN, VORRICHTUNG UND SYSTEM ZUR NACHBARSCHAFTSUMSCHALTUNG
PROCÉDÉ, DISPOSITIF ET SYSTÈME POUR UNE COMMUTATION DE VOISINAGE

(30) Priority: 29.12.2010 CN 201010612074
(43) Date of publication of application: 02.10.2013
(73) Proprietor: Huawei Technologies Co., Ltd., Longgang District Shenzhen, Guangdong 518129 (CN)
(72) Inventor: XIONG, Liqun, Guangdong 518129 (CN); JI, Jiagang, Guangdong 518129 (CN)
(74) Representative: Goddar, Heinz J.
(86) International application number: PCT/CN2011/083812
(87) International publication number: WO 2012/089008

(56) References cited:
- EP-A1- 2 262 316
- EP-A2- 2 160 071
- WO-A1-2010/075652
- CN-A- 101 453 765
- CN-A- 101 808 373
- CN-A- 102 026 316
- US-A1- 2006 046 724
- US-A1- 2010 130 209
- US-A1- 2010 278 141

## Description

### TECHNICAL FIELD

The present invention relates to the field of mobile communication technologies, and in particular, to a cell handover method, device, and system.

### BACKGROUND

In a wireless communication system, there are not only macro-cell base station (Macro cell) for wide coverage, and micro-cell base station (Micro cell) for hotspot coverage in traffic/throughput-intensive areas, but also Femto-cell base station (Femto cell) for smaller coverage. Femto cell is mainly applied to home, shopping mall, office building, and so on, and are rapidly developed as a new form of base station.

At present, when a terminal needs to be handed over from a Femto cell to a Micro cell, signals of the macro cell are automatically detected by the Femto cell, and a neighboring cell of the macro cell is added on the Femto cell side to meet the requirement of handover. However, no handover relationship from a sector of the cell to the area covered by the Femto cell is configured. Therefore, a call drop phenomenon occurs when the terminal enters the area covered by the Femto cell from the area covered by the macro cell.

To solve the problem of performing cell handover from the macro cell to the Femto cell, a technical solution for manually configuring a neighboring cell of the base station is provided, where the Femto cell is regarded as an ordinary sector, and a neighboring relationship is manually configured on the macro cell normally.

Because the neighboring cells of a same base station cannot have the same PN codes, the number of PN codes that can be configured for neighbors of a base station is also limited. Therefore, the method for manually configuring neighboring cells of a base station may cause a problem of insufficient neighboring cells and PN codes. In addition, after buying Femto cells, ordinary users install the Femto cells by themselves, and no unified planning can be performed for the application of the Femto cells.

EP 2262316 A1 discloses a method of identifying femto base station handover targets for user equipment in a wireless communications network, a computer program product and a femto base station gateway are disclosed. The method comprises the steps of: storing location history information identifying femto base station previously visited by user equipment; receiving an indicator from user equipment identifying a detected femto base station as a handover target; and correlating said indicator against said location history information for that user equipment to identify those femto base station hdving that indicator which have previously been visited by that user equipment as handover candidates.

US 2010/0130209 A1 discloses a method to improve handoff decision-making. The network receives a user handoff approval indication form a UE regarding handoff of the UE to a target cell and then determines whether to allow the handoff based on this user handoff approval indication.

### SUMMARY

The present invention provides a cell handover methods according to claims 1 and 11, a network equipment according to claim 6, a Femto-cell base station of claim 13, and a system of claim 15 to hand over a terminal from a macro cell to a Femto cell and solve the problem of insufficient neighboring cells and PN codes.

To achieve the above objectives, an embodiment of the present invention provides a cell handover method. The method includes: receiving, by a network equipment, a cell handover request sent by a source base station, where the handover request includes information of the source base station and information of a terminal requiring handover; querying, by the network equipment, a triplet including correspondence between the information of the source base station, the information of the terminal, and information of a target Femto cell, to obtain the information of the target Femto cell corresponding to the information of the terminal requiring the handover, where the triplet is generated by the network equipment according to the information of the source base station and information of the terminal which are obtained by the network equipment and according to the information of the terminal and information of the target Ferrito cell which are sent by the target Femto cell, when the terminal encounters call drop during the handover from the source base station to the target Femto cell; and instructing, by the network equipment, the target Femto cell to prepare resources for handover, and sending a handover command to the terminal requiring the handover, so that the terminal is handed over to the corresponding target Femto cell.

An embodiment of the present invention further provides a network equipment. The network equipment includes: a receiving device, configured to receive a cell handover request sent by a source base station, where the handover request includes information of the terminal requiring the handover, so that the terminal is handed over to the corresponding target Femto cell.

An embodiment of the present invention further provides a network-side equipment. The network-side equipment includes: a receiving device, configured to receive a cell handover request sent by a source base station, where the handover request includes information of the source base station and information of a terminal requiring handover; a querying device, configured to query a triplet including correspondence between the information of the source base station, the information of the terminal, and information of a target Femto cell, to obtain the information of the target Femto cell corresponding to the information of the terminal requiring the handover, where the triplet is generated by the network-side equipment according to the information of the source base station and information of the terminal which are obtained by the network-side equipment and according to the information of the terminal and information of the target Femto cell which are sent by the target Femto cell, when the terminal encounters call drop during the handover from the source base station to the target Femto cell; and a sending device, configured to instruct the target Femto cell to prepare resources for handover, and send a handover command to the terminal requiring the handover, so that the terminal is handed over to the corresponding target Femto cell.

An embodiment of the present invention further provides a cell handover method. The method includes: if a terminal encounters call drop during handover from a source base station to a target Femto cell and registers with the target Femto cell, or if a terminal encounters call drop during handover from a source base station to a target Femto cell and reestablishes a service within coverage of the target Femto cell, sending, by the target Femto cell, information of the terminal and information of the target Femto cell to a network-side equipment, so that the network-side equipment constructs a triplet including information of the source base station, the information of the terminal, and the information of the target Femto cell; if the terminal sends a cell handover request to the network-side equipment, where the cell handover request includes the information of the source base station and the information of the terminal requiring the handover, receiving, by the target Femto cell, a handover preparation message sent by the network-side equipment, where the handover preparation message is sent by the network-side equipment according to the information of the terminal requiring the handover and the triplet; and preparing, by the target Femto cell, resources for the handover according to the handover preparation message, so that the terminal is handed over from the source base station to the target Femto cell.

An embodiment of the present invention further provides a Femto cell. The Femto cell includes: an information sending device, configured to: if a terminal encounters call drop during handover from a source base station to the Femto cell and registers with the Femto cell, or if a terminal encounters call drop during handover from a source base station to the Femto cell and reestablishes a service within coverage of the Femto cell, send information of the terminal and information of the Femto cell to a network-side equipment, so that the network-side equipment constructs a triplet including information of the source base station, the information of the terminal, and the information of the Femto cell; and a handover device, configured to: if the terminal sends a cell handover request to the network-side equipment, where the cell handover request includes the information of the source base station and the information of the terminal requiring the handover, receive a handover preparation message sent by the network-side equipment, where the handover preparation message is sent by the network-side equipment according to the information of the terminal requiring the handover and the triplet; and prepare, resources for the handover according to the handover preparation message, so that the terminal is handed over from the source base station to the Femto cell.

An embodiment of the present invention further provides a cell handover system. The system includes the network-side equipment and the Femto cell mentioned in the above embodiments.

The embodiments of the present invention have the following beneficial effects: The network-side equipment stores a record including the information of the source base station, information of the terminal, and information of the Femto cell, and handover of the terminal from the source base station to the Femto cell is implemented according to the record. Furthermore, the limitation on non-repetition of cell numbers, sector numbers, carrier numbers, and PNs required in the configuration of neighboring cells is avoided, and resources such as PNs are saved. The embodiments are applicable to a wide range of scenarios and network planning is simpler.

### BRIEF DESCRIPTION OF DRAWINGS

The drawings described herein are provided to help further understand the present invention, and constitute a part of this application, but do not constitute a limitation on the present invention. In the drawings:
FIG. 1 is a diagram showing an instance of a networking structure of a cell handover system according to an embodiment of the present invention;
FIG. 2 is a flowchart of a cell handover method on a network side according to an embodiment of the present invention;
FIG. 3 is a flowchart of a cell handover method on a Femto cell side according to an embodiment of the present invention;
FIG. 4 is a first schematic diagram of an application scenario of cell handover according to an embodiment of the present invention;
FIG. 5 is a schematic flowchart of complete signaling interaction in a cell handover method according to an embodiment of the present invention;
FIG. 6 is a second schematic diagram of an application scenario of cell handover according to an embodiment of the present invention;
FIG. 7 is a third schematic diagram of an application scenario of cell handover according to an embodiment of the present invention;
FIG. 8 is a functional block diagram of a network-side equipment according to an embodiment of the present invention; and
FIG. 9 is a functional block diagram of a Femto cell according to an embodiment of the present invention.

### DESCRIPTION OF EMBODIMENTS

To make the objectives, technical solutions, and advantages of the present invention clearer, the embodiments of the present invention are hereinafter described in detail with reference to the accompanying drawings. The embodiments of the present invention herein are exemplary embodiments for explaining the present invention and the present invention is not limited to such embodiments.

An embodiment of the present invention provides a cell handover method, which is applied in a process of handover of a terminal from a source base station to a Femto cell. The source base station provided in the embodiment of the present invention may be a macro cell or a Femto cell. The subsequent embodiments are described by using a macro cell as the source base station. The cell handover method is applicable to a code division multiple access (CDMA 1X) system between the second generation and the third generation or an enhanced code division multiple access (CDMA EVDO) system. In addition, the cell handover method may be applicable to wireless communication systems requiring configuration of neighboring cells, such as a wideband code division multiple access (WCDMA, Wideband Code Division Multiple Access) system, a time division synchronous code division multiple access (TD-SCDMA, Time Division Synchronous Code Division Multiple Access) system, a global system for mobile communications (GSM, Global System Mobile Communications), a long term evolution (LTE, Long Term Evolution) system, and a worldwide interoperability for microwave access (WiMAX, Worldwide Interoperability for Microwave Access) system. However, the specific application scenarios are not limited thereto, and may be determined according to an actual situation.

The equipments involved in this embodiment include: a terminal, a source base station, and a Femto cell; and further include a network-side equipment for cell handover. The network-side equipment may be any one of the following: a mobile switching center emulation (MSCe, Mobile Switching Center Emulation), a media gateway (MGW, Media Gateway), a base station controller (BSC, Base Station Controller), a Femto gateway (FGW, Femto Gateway), a network management system (NMS, Network Management System), a packet data serving node (PDSN, Packet Data Serving Node), a home location register (HLR, Home Location Register), and an added server. However, the network-side equipment is not limited thereto and may be determined according to an actual situation.

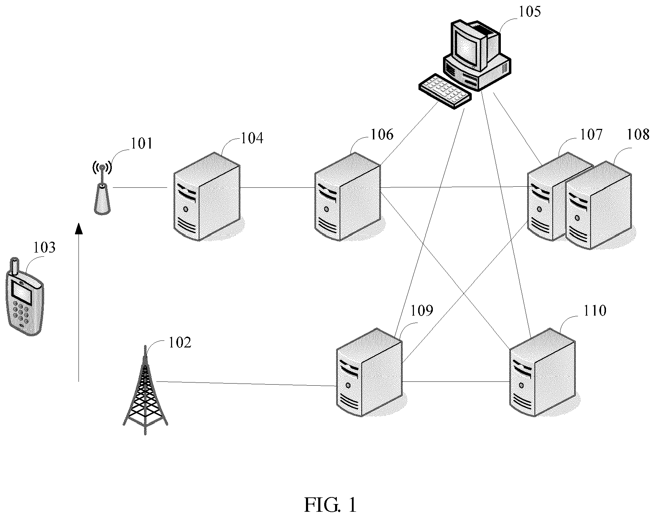

FIG. 1 is a diagram showing an instance of a networking structure of a cell handover system according to an embodiment of the present invention. As shown in FIG. 1, the networking structure includes: a Femto cell 101, a macro cell 102, and a terminal 103; and further includes a security gateway (SeGW, Security GateWay) 104, an NMS 105, an FGW 106, an MSCe 107, an MGW 108, a BSC 109, and a PDSN 110. The above networking structure is only described exemplarily, but is not limited thereto, and the specific networking structure may be determined according to an actual situation.

The following describes a cell handover method in the embodiments of the present invention from the perspectives of a network side and a Femto cell side.

### Network side:

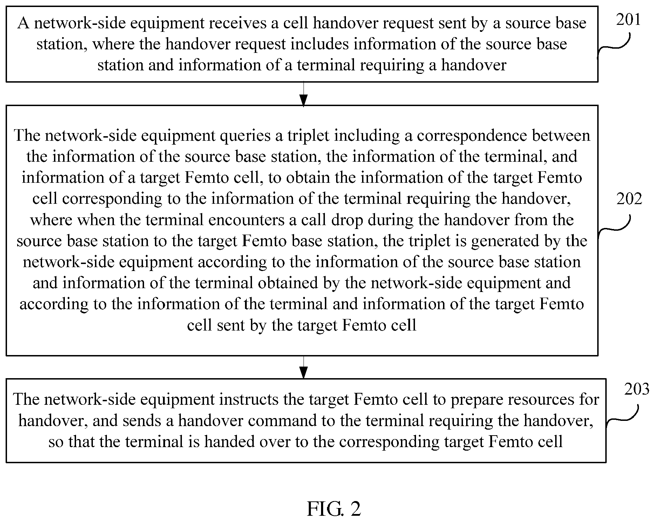

FIG. 2 is a flowchart of a cell handover method on a network side according to an embodiment of the present invention. As shown in FIG. 2, the method includes:
Step 201: A network-side equipment receives a cell handover request sent by a source base station, where the handover request includes information of the source base station and information of a terminal requiring handover.
Step 202: The network-side equipment queries a triplet including a correspondence between the information of the source base station, the information of the terminal, and information of a target Femto cell, to obtain the information of the target Femto cell corresponding to the information of the terminal requiring the handover, where when the terminal encounters call drop during the handover from the source base station to the target Femto cell, the triplet is generated by the network-side equipment according to the information of the source base station and information of the terminal which are obtained by the network-side equipment and according to the information of the terminal and information of the target Femto cell which are sent by the target Femto cell.
Step 203: The network-side equipment instructs the target Femto cell to prepare resources for handover, and sends a handover command to the terminal requiring the handover, so that the terminal is handed over to the corresponding target Femto cell.

As shown in FIG. 1, optionally, the network-side equipment of this embodiment is an MSCe 107, and the source base station is a macro cell 102. However, in an actual application, the network-side equipment may also be other equipment s capable of implementing equivalent functions, and the source base station may also be a Femto cell.

The information of the macro cell includes one or a combination of a cell number, a sector number, a carrier number, a PN, and a subnet number. The information of the terminal may include one or a combination of an international mobile subscriber Identity (IMSI, International Mobile Subscriber Identification), an emergency service number (ESN, Emergency Service Number), a mobile equipment identification number (MEID, Mobile Equipment Identification), a unicast access terminal identifier (UATI, Unicast Access Terminal Identifier), and a phone number. The information of the Femto cell may include one or a combination of a Femto cell identifier, a cell number, a sector number, a PN, and a frequency number.

In this embodiment, the terminal implements a call service through the macro cell before the terminal is handed over from the macro cell to the Femto cell equipment. Therefore, after receiving the information of the Femto cell and information of the terminal which are sent by the Femto cell, the network-side equipment may search a call log according to the information of the Femto cell and information of the terminal, to obtain the information of the macro cell beforehand.

Optionally, when there are multiple target Femto cells corresponding to the information of the source base station and information of the terminal, step S203 specifically includes: instructing the multiple target Femto cells to prepare resources for handover, and sending a handover command to the terminal requiring the handover, where the handover command includes the information of the multiple target Femto cells.

Optionally, the method further includes: receiving, by the network-side equipment, a handover result sent by the target Femto cell; and updating the triplet according to the handover result.

For example, when the number of handover failures increases to a preset first upper limit, the network-side equipment deletes the triplet on which the handover is based; or when the number of handovers increases to a preset first upper limit and the number of successes decreases to zero from a preset second upper limit, the network-side equipment deletes the triplet on which the handover is based. In this way, the record may be updated according to multiple handover results, so as to better ensure the success ratio of handover.

An optional updating method is: setting the maximum value of the number of failures, and the number of failures is added by one if the handover result indicates a failure; and deleting the triplet when the number of failures in the handover result reaches the maximum value. For example, the maximum number of failures may be set to 20, and the initial number of failures is 0; the number of failures is added by one after each failure. When the number of failures reaches 20, it is considered that the triplet needs to be updated, and therefore the triplet is deleted.

Another optional updating method is: setting the maximum value of the number of successes and the maximum value of the number of failures; the number of successes is added by one if the handover result indicates a success; the number of failures is added by one if the handover result indicates a failure; furthermore, reducing the number of failures by one when the number of successes reaches the maximum value and a handover result received again indicates a success; reducing the number of successes by one when the number of failures reaches the maximum value and a handover result received again indicates a failure; and deleting the triplet when the number of failures reaches the maximum value and the number of successes is zero. For example, the maximum number of successes may be set to 255, and the maximum number of failures may be set to 20. When the number of cumulative successes reaches 255, it does not increase any more, and after each success, the number of failures is reduced by one. Conversely, when the maximum number of failures reaches 20, it does not increase any more, and after each failure, the number of successes is reduced by one. Furthermore, when the number of failures reaches 20 and the number of successes is reduced to 0, it is considered that the triplet needs to be updated, and therefore the triplet is deleted.

Through the above steps, the network side may store a triplet record including the information of the base station, information of the terminal, and information of the Femto cell, and handover of the terminal from the source base station to the Femto cell may be implemented according to the record. Further, the success ratio of handover may be further improved by counting and updating the triplet.

### Femto cell side:

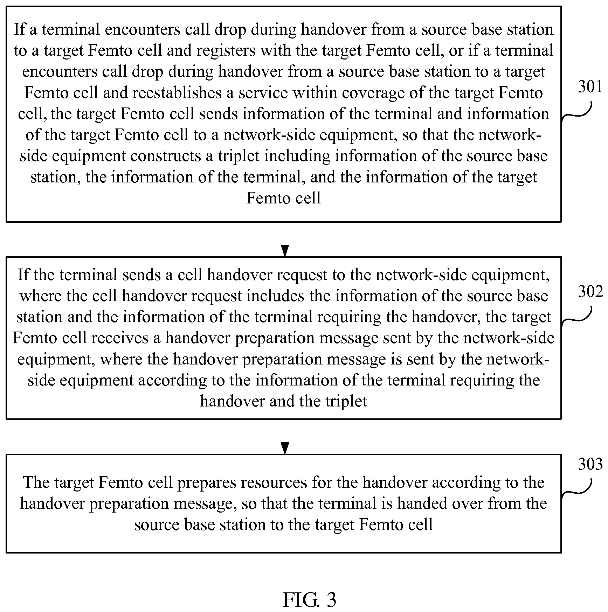

FIG. 3 is a flowchart of a cell handover method on a Femto cell side according to an embodiment of the present invention. As shown in FIG. 3, the method includes:
Step 301: If a terminal encounters call drop during handover from a source base station to a target Femto cell and registers with the target Femto cell, or if a terminal encounters call drop during handover from a source base station to a target Femto cell and reestablishes a service within coverage of the target Femto cell, the target Femto cell sends information of the terminal and information of the target Femto cell to a network-side equipment, so that the network-side equipment constructs a triplet including information of the source base station, the information of the terminal, and the information of the target Femto cell.
Step 302: If the terminal sends a cell handover request to the network-side equipment, where the cell handover request includes the information of the source base station and the information of the terminal requiring the handover, the target Femto cell receives a handover preparation message sent by the network-side equipment, where the handover preparation message is sent by the network-side equipment according to the information of the terminal requiring the handover and the triplet.
Step 303: The target Femto cell prepares resources for the handover according to the handover preparation message, so that the terminal is handed over from the source base station to the target Femto cell.

Optionally, the method of this embodiment further includes: sending, by the target Femto cell, a handover result message to the network-side equipment, so that the network-side equipment updates, according to the handover result message, the triplet stored by the network-side equipment.

Through the above steps, the network side generates and stores a record including the information of the base station, information of the terminal, and information of the Femto cell; furthermore, the Femto cell receives a notification for handover preparation which is sent according to the record, to implement the handover of the terminal from the macro cell to the Femto cell.

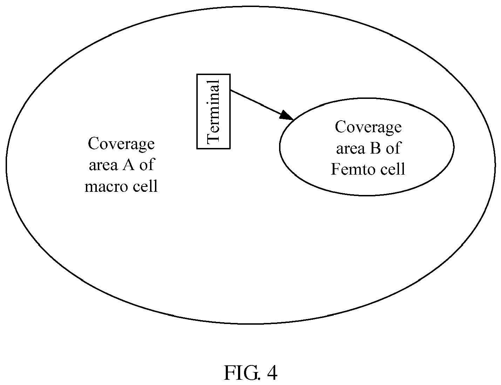

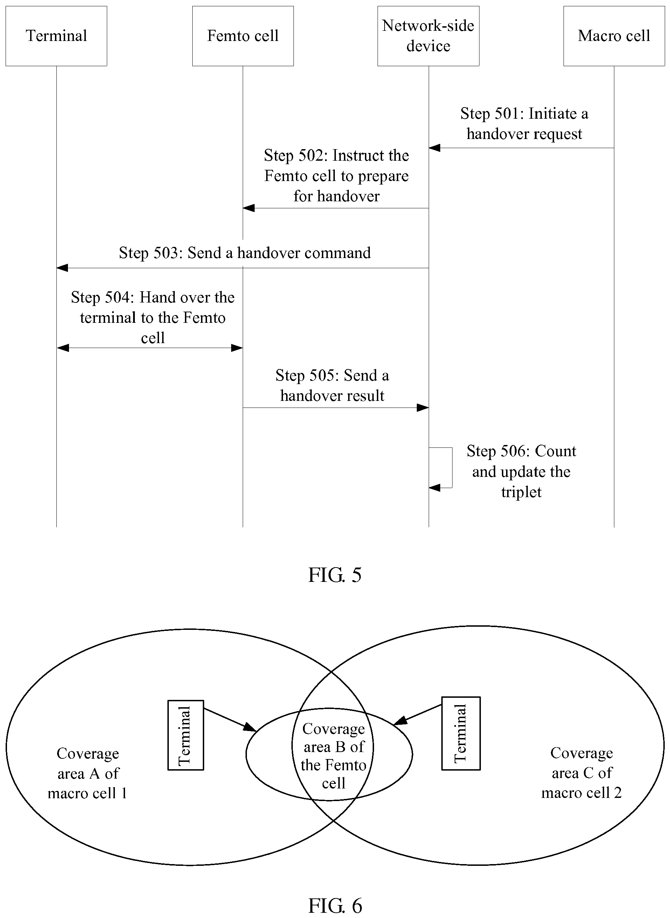

The following further describes the cell handover method through interactions between the terminal, the Femto cell, the macro cell, and the network-side equipment with reference to FIG. 4 and FIG. 5.

FIG. 4 is a first schematic diagram of an application scenario of cell handover according to an embodiment of the present invention. As shown in FIG. 4, the coverage area covered by the macro cell is A, and the coverage area of the Femto cell is B; cell handover is performed when the terminal enters area B from area A.

FIG. 5 is a schematic flowchart of a complete signaling interaction in a cell handover method according to an embodiment of the present invention. As shown in FIG. 5, the method includes:
Step 501: A macro cell initiates a handover request to a network-side equipment, where the network-side equipment stores a triplet including information of a macro cell, information of a terminal, and information of a Femto cell.
   In this embodiment, when a terminal having a triplet record in the network-side equipment enters the coverage area covered by the Femto cell from the coverage area of the macro cell again, in which case the signal in coverage area A of the macro cell becomes poor, and when no available branch for handover is detected, the macro cell may initiate, to the network-side equipment, handover from the macro cell to the Femto cell.
Step 502: The network-side equipment instructs, according to the triplet, the corresponding Femto cell equipment to prepare for handover.
   In this embodiment, the network-side equipment may query the triplet according to the information of the terminal or the information of the terminal and information of the macro cell, to determine the corresponding Femto cell.
Step 503: The network-side equipment sends a handover command to the terminal according to the triplet.
   In this embodiment, the MSCe may instruct the target Femto cell to prepare to accept the terminal and to prepare corresponding resources, and then instruct the terminal to start handover, where the terminal performs hard handover according to a standard.
Step 504: The terminal is handed over to the Femto cell.
Step 505: The Femto cell sends a success or failure handover result to the network-side equipment.
Step 506: The network-side equipment receives the handover result sent by the Femto cell, counts the number of successes and/or the number of failures in the handover result, and updates the triplet according to the counting result.

Optionally, in this embodiment, the process of generating the triplet by the network-side equipment includes the following steps:
Step 1: The terminal encounters call drop during the handover from the macro cell to the target Femto cell and registers with the target Femto cell, or the terminal encounters call drop during the handover from the source base station to the target Femto cell and reestablishes a service within the coverage of the target Femto cell.
   In this embodiment, when the terminal enters area B of the Femto cell from area A of the macro cell for the first time, the terminal encounters call drop because no handover relationship is configured. If the terminal registers with area B of the Femto cell in a certain time range t after the call drop occurs, it is considered that the call drop occurs during the handover from macro cell A to Femto cell B, where the call drop during the handover may be abbreviated to macro-to-F call drop. In addition, reestablishing a service in area B of the Femto cell may be used as a decision condition for handover.
Step 2: The target Femto cell sends information of the target Femto cell and information of the call-dropped terminal to the network-side equipment.
   In this embodiment, when the macro-to-F call drop occurs, the Femto cell equipment may send the information of the Femto cell and information of the terminal to the MSCe.
Step 3: The network-side equipment generates and stores a triplet.
   In this embodiment, the MSCe may obtain the information of the macro cell beforehand. Therefore, the MSCe may record a triplet about the call drop for reference in subsequent handover, where the triplet includes the information of the macro cell, information of the terminal, and information of the Femto cell.

The information of the macro cell includes: a cell number, a sector number, a carrier number, a PN, and a subnet number (for DO). The information of the terminal includes: an IMSI, an ESN, an MEID, a UATI, and a phone number. The information of the Femto cell where registration is performed includes a Femto cell ID, a cell number, a sector number, a PN, and a frequency number.

In this embodiment, the triplet may be recorded once every time macro-to-F call drop occurs, or may be recorded by sliding a time window after the certain number of call drops occur. The specific implementation may be determined depending on specific scenarios.

FIG. 6 is a second schematic diagram of an application scenario of cell handover according to an embodiment of the present invention. A Femto cell itself is in the handover area covered by a macro cell. As shown in FIG. 6, the coverage area covered by macro cell 1 is A, and the area covered by macro cell 2 is C.

Therefore, a terminal may be handed over from coverage area A of the macro cell to coverage area B of the Femto cell, or may be handed over from macro sector C to area B of the Femto cell. Because the information of the macro cell from which the terminal is hand over is different, there are two independent triplets without affecting each other. Likewise, for a same macro cell, when different terminals are handed over to the area covered by a same Femto cell, there are also different triplets without affecting each other.

Therefore, the information of the Femto cell may be queried according to the information of the terminal and the information of the macro cell from which the terminal is hand over. If the information of the terminal and the information of the macro cell determine a unique corresponding Femto cell, handover accuracy can be ensured. If the information of the terminal and the information of the macro cell determine multiple Femto cells, that is, a same macro sector includes multiple Femto cells, more complex operations are required.

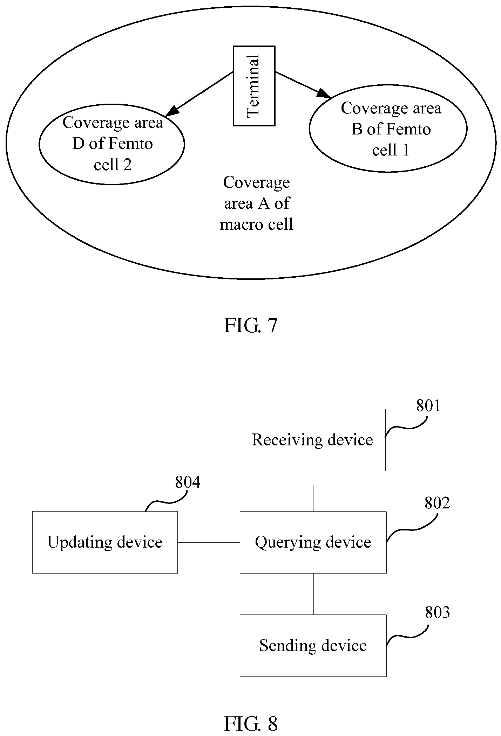

FIG. 7 is a third schematic diagram of an application scenario of cell handover according to an embodiment of the present invention. As shown in FIG. 7, there are multiple Femto cells within the coverage of a same macro cell, and a same terminal may either enter coverage area B of Femto cell 1 or enter coverage area D of Femto cell 2. In this case, the macro cell may instruct the two Femto cells to simultaneously prepare resources to accept the terminal in the incoming handover, and finally, only one of the two handovers is successful, or both handovers fail (the previously prepared resources are released when the handover(s) fails within a preset duration).

As long as one of the two handovers is successful, handover success is recorded. No matter whether the handover is successful, the corresponding two triplets are counted once according to the actual handover situation (a failure is recorded for the triplet when the handover is successful but there is no incoming handover of the terminal).

The above is only exemplary description of the handover, but the specific implementation is not limited thereto and may be determined according to an actual situation.

It may be seen from the above embodiments that: The network side may store a record including the information of the base station, information of the terminal, and information of the Femto cell, and the handover of the terminal from the macro cell to the Femto cell is implemented according to the record. Because the conventional way of configuring neighboring cells beforehand is abandoned, the limitation on non-repetition of cell numbers, sector numbers, carrier numbers, and PNs required in the configuration of neighboring cells is avoided; all non-neighboring Femto cells may use the same cell number, sector number, and PN, which are distinguished by using Femto cell IDs, where the number of used Femto cell IDs is not limited. Therefore, resources such as PNs are saved; the embodiment is applicable to a wide range of scenarios; and network planning is simpler.

An embodiment of the present invention further provides a network-side equipment to implement the cell handover method on the network side in the above embodiment. FIG. 8 is a functional block diagram of the network-side equipment of this embodiment. As shown in FIG. 8, the network-side equipment includes: a receiving device 801, configured to receive a cell handover request sent by a source base station, where the handover request includes information of the source base station and information of a terminal requiring handover; a querying device 802, configured to query a triplet including correspondence between the information of the source base station, the information of the terminal, and information of a target Femto cell, to obtain the information of the target Femto cell corresponding to the information of the terminal requiring the handover, where when the terminal encounters call drop during the handover from the source base station to the target Femto cell, the triplet is generated by the network-side equipment according to the information of the source base station and information of the call-dropped terminal which are obtained by the network-side equipment and according to the information of the call-dropped terminal and information of the target Femto cell which are sent by the target Femto cell; and a sending device 803, configured to instruct the target Femto cell to prepare resources for handover, and send a handover command to the terminal requiring the handover, so that the terminal is handed over to the corresponding target base station.

Optionally, when there are multiple target Femto cells corresponding to the information of the source base station and the information of the terminal, the sending device 803 is specifically configured to instruct the corresponding multiple target Femto cells to prepare resources for handover, and send a handover command to the terminal requiring the handover, where the handover command includes the information of the multiple target Femto cells.

Optionally, the receiving device 801 of this embodiment is further configured to receive a handover result sent by the target Femto cell. As shown in FIG. 8, the network-side equipment further includes: an updating device 804, configured to update the triplet according to the handover result.

Optionally, the updating device 804 is specifically configured to: when the number of handover failures increases to a preset first upper limit, delete the triplet on which the handover is based, or when the number of handover failures increases to a preset first upper limit, and the number of successes decreases to zero from a preset second upper limit, delete the triplet on which the handover is based.

For example, the maximum value of the number of successes and the maximum value of the number of failures are set. The number of successes is added by one if the handover result indicates a success; and the number of failures is added by one if the handover result indicates a failure. In addition, the number of failures is reduced by one when the number of successes reaches the maximum value and a handover result received again indicates a success; the number of successes is reduced by one when the number of failures reaches the maximum value and a handover result received again indicates a failure; and deletes the triplet when the number of failures in the handover result reaches the maximum value and/or the number of successes is zero.

In this embodiment, the information of the macro cell may include one or a combination of a cell number, a sector number, a carrier number, a PN, and a subnet number. The information of the terminal may include one or a combination of an international mobile subscriber identification number, an emergency service number, a mobile equipment identification number, a user access terminal identifier, and a phone number. The information of the Femto cell may include one or a combination of a Femto cell identifier, a cell number, a sector number, a PN, and a frequency number.

In this embodiment, the network-side equipment may be an MSCe, an MGW, a BSC, an FGW, an NMS, a PDSN, or an HLR. In addition, for a network with a large number of users, a separate server may be added for recording handover information, so as to have a better effect.

The network-side equipment of this embodiment stores a record including the information of the base station, information of the terminal, and information of the Femto cell, and handover of the terminal from the source base station to the Femto cell may be implemented according to the record; furthermore, the success ratio of handover can be further improved by counting and updating the triplet.

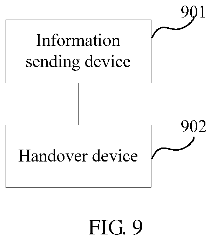

An embodiment of the present invention further provides a Femto cell, to implement the cell handover method on the Femto cell side in the above embodiment. FIG. 9 is a functional block diagram of a Femto cell of this embodiment. As shown in FIG. 9, the Femto cell includes: an information sending device 901, configured to: if a terminal encounters call drop during handover from a source base station to the Femto cell and registers with the Femto cell, or if a terminal encounters call drop during handover from a source base station to the Femto cell and reestablishes a service within coverage of the Femto cell, send information of the call-dropped terminal and information of the Femto cell to a network-side equipment, so that the network-side equipment constructs a triplet including information of the source base station, the information of the terminal, and the information of the Femto cell; and a handover device 902, configured to: if the terminal sends a cell handover request to the network-side equipment, where the cell handover request includes the information of the source base station and the information of the terminal requiring the handover, receive a handover preparation message sent by the network-side equipment, where the handover preparation message is sent by the network-side equipment according to the information of the terminal requiring the handover and the triplet; and prepare resources for the handover according to the handover preparation message, so that the terminal is handed over from the source base station to the Femto cell.

Optionally, the information sending device 901 is further configured to send a handover result message to the network-side equipment, so that the network-side equipment updates, according to the handover result message, the triplet stored by the network-side equipment.

The Femto cell of the embodiment of the present invention may perform handover for the terminal after receiving a notification sent by the network-side equipment, so as to implement handover of the terminal from the macro cell to the Femto cell; furthermore, the Femto cell may send the information of the Femto cell and the information of the terminal to the network-side equipment to generate a triplet; in addition, the Femto cell may send handover results so that the network-side equipment counts the handover results and updates the triplet, so as to improve the success ratio of handover.

Components of the device of this embodiment are used for implementing the steps of the methods of the foregoing embodiments. Because the steps are described in detail in the method embodiments, details are not given herein further.

An embodiment of the present invention further provides a cell handover system, which includes the network-side equipment and the Femto cell described in the foregoing embodiments. For the working principles of the network-side equipment and the Femto cell in the system, reference may be made to the description of the foregoing embodiments.

By using the technical solutions of the embodiments of the present invention, the network-side equipment stores a triplet record including the information of the base station, information of the terminal, and information of the Femto cell, and handover of the terminal from the macro cell to the Femto cell is implemented according to the record. Because the conventional way of configuring neighboring cells beforehand is abandoned, the limitation on non-repetition of cell numbers, sector numbers, carrier numbers, and PNs required in the configuration of neighboring cells is avoided; all non-neighboring Femto cells may use the same cell number, sector number, and PN, which are distinguished by using Femto cell IDs, where the number of used Femto cell IDs is not limited. Therefore, resources such as PNs are saved; the embodiments are applicable to a wide range of scenarios; and network planning is simpler.

Persons of ordinary skill in the art may appreciate that units and algorithm steps provided in each embodiment can be implemented by electronic hardware, computer software, or a combination of the electronic hardware and computer software. To clearly describe the interchangeability of the hardware and software, the components and steps of each embodiment have already been described in general in the specification according to functionality. Whether these functions are executed in the form of hardware or software depends on specific applications and design constraints of the technical solutions. Those skilled in the art can use different methods to implement the described functions in each specific application, but such implementation shall be considered to fall within the scope of the present invention.

The steps of the method or algorithm described herein may be implemented through hardware, or through a software module executed by a processor, or through a combination of the hardware and the software module. The software module may be placed in a random access memory (RAM), a memory, a read only memory (ROM), an electrically programmable ROM, an electrically erasable programmable ROM, a register, a hard disk, a removable disk, a CD-ROM, or any other form of storage medium known in the art.

The objectives, technical solutions, and beneficial effects of the present invention have been described in detail with reference to the foregoing embodiments. It is understandable that these embodiments are only some exemplary embodiments and are not intended to limit the protection scope of the present invention. Any modifications and variations made to the present invention without departing from the idea and principle of the present invention shall fall within the protection scope of the present invention.

## Claims

1. A cell handover method, comprising:
receiving (201), by a network equipment, a cell handover request sent by a source base station, wherein the handover request comprises information of the source base station and information of a terminal requiring handover;
querying (202), by the network equipment, a triplet including correspondence between the information of the source base station, the information of the terminal, and information of a target Femto-cell base station, to obtain the information of the target Femto-cell base station corresponding to the information of the terminal requiring the handover; and
instructing, by the network equipment, the target Femto-cell base station to prepare resources for handover, and sending a handover command to the terminal requiring the handover, so that the terminal is handed over to the target Femto-cell base station;
**characterized in that** the triplet is generated by the network equipment according to the information of the source base station which is obtained by the network equipment and according to the information of the terminal and information of the target Femto-cell base station which are sent by the target Femto-cell base station, when the terminal enters a coverage area of the target Femto-cell from a coverage area of the source base station for the first time and encounters a call drop.

2. The method according to claim 1, wherein, when there are multiple target Femto-cell base stations corresponding to the information of the source base station and the information of the terminal, the instructing, by the network equipment, the target Femto-cell base station to prepare resources for handover, and sending a handover command to the terminal requiring the handover, comprises:
instructing the multiple target Femto-cell base stations to prepare resources for handover, and sending the handover command to the terminal requiring the handover,
wherein the handover command comprises information of the multiple target Femto-cell base stations.

3. The method according to claim 1, further comprising:
receiving, by the network equipment, a handover result sent by the target Femto-cell base station; and updating the triplet according to the handover result.

4. The method according to claim 3, wherein the updating, by the network equipment, the triplet according to the handover result comprises:
deleting the triplet on which the handover is based, when the number of handover failures increases to a preset first upper limit.

5. The method according to claim 3, wherein the updating, by the network equipment, the triplet according to the handover result further comprises:
deleting the triplet on which the handover is based, when the number of handover failures increases to a preset first upper limit, and the number of handover successes decreases to zero from a preset second upper limit.

6. A network equipment, comprising:
a receiving device (801), configured to receive a cell handover request sent by a source base station, wherein the handover request comprises information of the source base station and information of a terminal requiring handover;
a querying device (802), configured to query a triplet including correspondence between the information of the source base station, the information of the terminal, and information of a target Femto-cell base station, to obtain the information of the target Femto-cell base station corresponding to the information of the terminal requiring the handover; and
a sending device (803), configured to instruct the target Femto-cell base station to prepare resources for handover, and send a handover command to the terminal requiring the handover, so that the terminal is handed over to the corresponding target Femto-cell base station;
**characterized in that** the triplet is generated by the network equipment according to the information of the source base station which is obtained by the network equipment and according to the information of the terminal and information of the target Femto-cell base station which are sent by the target Femto-cell base station, when the terminal enters a coverage area of the target Femto-cell from a coverage area of the source base station for the first time and encounters a call drop.

7. The network equipment according to claim 6, wherein when there are multiple target Femto-cell base stations corresponding to the information of the source base station and the information of the terminal,
the sending device (803) is specifically configured to instruct the corresponding multiple target Femto-cell base stations to prepare resources for handover, and send the handover command to the terminal requiring the handover, wherein the handover command comprises information of the multiple target Femto-cell base stations.

8. The network equipment according to claim 6, wherein:
the receiving device (801) is further configured to receive a handover result sent by the target Femto-cell base station; and
the network equipment further comprises: an updating device (804), configured to update the triplet according to the handover result.

9. The network equipment according to claim 8, wherein:
the updating device (804) is specifically configured to delete the triplet on which the handover is based, when the number of handover failures increases to a preset first upper limit.

10. The network equipment according to claim 8, wherein:
the updating device (804) is further specifically configured to delete the triplet on which the handover is based, when the number of handover failures increases to a preset first upper limit, and the number of handover successes decreases to zero from a preset second upper limit.

11. A cell handover method, comprising:
if a terminal encounters call drop when the terminal enters a coverage area of a target Femto-cell base sation from a coverage area of a source base station for the first time and registers with the target Femto-cell base station, or if a terminal encounters call drop when the terminal enters a coverage area of a target Femto-cell base station from a coverage area of a source base station for the first time and reestablishes a service within coverage of the target Femto-cell base station, sending (301), by the target Femto-cell base station, information of the terminal and information of the target Femto-cell base station to a network equipment, so that the network equipment constructs a triplet comprising information of the source base station, the information of the terminal, and the information of the target Femto-cell base station;
receiving (302), by the target Femto-cell base station, a handover preparation message sent by the network equipment, wherein the handover preparation message is sent by the network equipment according to the information of the terminal requiring handover and the triplet; and
preparing (303), by the target Femto-cell base station according to the handover preparation message, resources for handover, so that the terminal is handed over from the source base station to the target Femto-cell base station.

12. The method according to claim 11, further comprising:
sending, by the target Femto-cell base station, a handover result message to the network equipment, so that the network equipment updates, according to the handover result message, the triplet stored by the the network equipment.

13. A Femto-cell base station, comprising:
an information sending device (901), configured to: if a terminal encounters call drop when the terminal enters a coverage area of a target Femto-cell base station from a coverage area of a source base station for the first time and registers with the Femto-cell base station, or if a terminal encounters call drop when the terminal enters a coverage area of a target Femto-cell base station from a coverage area of a source base station for the first time reestablishes a service within coverage of the Femto-cell base station, send information of the terminal and information of the Femto-cell base station to a network equipment, so that the network equipment constructs a triplet comprising information of the source base station, the information of the terminal, and the information of the Femto-cell base station; and
a handover device (902), configured to: receive a handover preparation message sent by the network equipment, wherein the handover preparation message is sent by the network equipment according to the information of the terminal requiring the handover and the triplet; and prepare resources for the handover according to the handover preparation message, so that the terminal is handed over from the source base station to the Femto-cell base station.

14. The Femto-cell base station according to claim 13, wherein:
the information sending device is further configured to send a handover result message to the network equipment, so that the network equipment updates, according to the handover result message, the triplet stored by the network equipment.

15. A cell handover system, comprising: the network equipment according to any one of claims 6 to 10 and the Femto-cell base station according to claim 13 or 14.

## Patentansprüche

1. Zellenübergabeverfahren, das Folgendes umfasst:
Empfangen (201), durch eine Netzwerkausrüstung, einer Zellenübergabeanforderung, die durch eine Quellenbasisstation gesendet wurde, wobei die Übergabeanforderung Informationen der Quellenbasisstation und Informationen eines Endgerätes, das eine Übergabe verlangt, umfasst;
Abfragen (202), durch die Netzwerkausrüstung, eines Triplets, das eine Entsprechung zwischen den Informationen der Quellenbasisstation, den Informationen des Endgerätes und Informationen einer Ziel-Femtozellen-Basisstation enthält, um die Informationen der Ziel-Femtozellen-Basisstation zu erhalten, die den Informationen des Endgerätes entsprechen, das die Übergabe verlangt; und
Anweisen, durch die Netzwerkausrüstung, der Ziel-Femtozellen-Basisstation, die Ressourcen für eine Übergabe vorzubereiten, und Senden eines Übergabebefehls an das Endgerät, das die Übergabe verlangt, so dass das Endgerät an die Ziel-Femtozellen-Basisstation übergeben wird;
**dadurch gekennzeichnet, dass** das Triplet durch die Netzwerkausrüstung gemäß den Informationen der Quellenbasisstation, die durch die Netzwerkausrüstung erhalten werden, und gemäß den Informationen des Endgerätes und Informationen der Ziel-Femtozellen-Basisstation, die durch die Ziel-Femtozellen-Basisstation gesendet werden, generiert wird, wenn das Endgerät aus einem Versorgungsbereich der Quellenbasisstation zum ersten Mal in einen Versorgungsbereich der Ziel-Femtozelle eintritt und mit einem Rufabwurf konfrontiert ist.

2. Verfahren nach Anspruch 1, wobei, wenn es mehrere Ziel-Femtozellen-Basisstationen gibt, die den Informationen der Quellenbasisstation und den Informationen des Endgerätes entsprechen, das Anweisen, durch die Netzwerkausrüstung, der Ziel-Femtozellen-Basisstation, Ressourcen für die Übergabe vorzubereiten, und das Senden eines Übergabebefehls an das Endgerät, das die Übergabe verlangt, Folgendes umfasst:
Anweisen der mehreren Ziel-Femtozellen-Basisstationen, Ressourcen für eine Übergabe vorzubereiten, und Senden des Übergabebefehls an das Endgerät, das die Übergabe verlangt,
wobei der Übergabebefehl Informationen der mehreren Ziel-Femtozellen-Basisstationen umfasst.

3. Verfahren nach Anspruch 1, das des Weiteren Folgendes umfasst:
Empfangen, durch die Netzwerkausrüstung, eines Übergabeergebnisses, das durch die Ziel-Femtozellen-Basisstation gesendet wurde; und Aktualisieren des Triplets gemäß dem Übergabeergebnis.

4. Verfahren nach Anspruch 3, wobei das Aktualisieren, durch die Netzwerkausrüstung, des Triplets gemäß dem Übergabeergebnis Folgendes umfasst:
Löschen des Triplets, auf dem die Übergabe basiert, wenn die Anzahl von erfolglosen Übergaben auf eine voreingestellte erste Obergrenze ansteigt.

5. Verfahren nach Anspruch 3, wobei das Aktualisieren, durch die Netzwerkausrüstung, des Triplets gemäß dem Übergabeergebnis des Weiteren Folgendes umfasst:
Löschen des Triplets, auf dem die Übergabe basiert, wenn die Anzahl von erfolglosen Übergaben auf eine voreingestellte erste Obergrenze ansteigt, und die Anzahl von erfolgreichen Übergaben von einer voreingestellten zweiten Obergrenze aus auf null abnimmt.

6. Netzwerkausrüstung, die Folgendes umfasst:
eine Empfangsvorrichtung (801), die dafür konfiguriert ist, eine Zellenübergabeanforderung zu empfangen, die durch eine Quellenbasisstation gesendet wurde, wobei die Übergabeanforderung Informationen der Quellenbasisstation und Informationen eines Endgerätes, das eine Übergabe verlangt, umfasst;
eine Abfragevorrichtung (802), die dafür konfiguriert ist, ein Triplet abzufragen, das eine Entsprechung zwischen den Informationen der Quellenbasisstation, den Informationen des Endgerätes und Informationen einer Ziel-Femtozellen-Basisstation enthält, um die Informationen der Ziel-Femtozellen-Basisstation zu erhalten, die den Informationen des Endgerätes entsprechen, das die Übergabe verlangt; und
eine Sendevorrichtung (803), die dafür konfiguriert ist, die Ziel-Femtozellen-Basisstation anzuweisen, Ressourcen für eine Übergabe vorzubereiten, und einen Übergabebefehl an das Endgerät, das die Übergabe verlangt, zu senden, so dass das Endgerät an die entsprechende Ziel-Femtozellen-Basisstation übergeben wird;
**dadurch gekennzeichnet, dass** das Triplet durch die Netzwerkausrüstung gemäß den Informationen der Quellenbasisstation, die durch die Netzwerkausrüstung erhalten werden, und gemäß den Informationen des Endgerätes und Informationen der Ziel-Femtozellen-Basisstation, die durch die Ziel-Femtozellen-Basisstation gesendet werden, generiert wird, wenn das Endgerät aus einem Versorgungsbereich der Quellenbasisstation zum ersten Mal in einen Versorgungsbereich der Ziel-Femtozelle eintritt und mit einem Rufabwurf konfrontiert ist.

7. Netzwerkausrüstung nach Anspruch 6, wobei, wenn es mehrere Ziel-Femtozellen-Basisstationen gibt, die den Informationen der Quellenbasisstation und den Informationen des Endgerätes entsprechen,
die Sendevorrichtung (803) speziell dafür konfiguriert ist, die entsprechenden mehreren Ziel-Femtozellen-Basisstationen anzuweisen, Ressourcen für eine Übergabe vorzubereiten, und den Übergabebefehl an das Endgerät, das die Übergabe verlangt, zu senden, wobei der Übergabebefehl Informationen der mehreren Ziel-Femtozellen-Basisstationen umfasst.

8. Netzwerkausrüstung nach Anspruch 6, wobei:
die Empfangsvorrichtung (801) des Weiteren dafür konfiguriert ist, ein Übergabeergebnis zu empfangen, das durch die Ziel-Femtozellen-Basisstation gesendet wurde; und
die Netzwerkausrüstung des Weiteren eine Aktualisierungsvorrichtung (804) umfasst, die dafür konfiguriert ist, das Triplet gemäß dem Übergabeergebnis zu aktualisieren.

9. Netzwerkausrüstung nach Anspruch 8, wobei:
die Aktualisierungsvorrichtung (804) speziell dafür konfiguriert ist, das Triplet, auf dem die Übergabe basiert, zu löschen, wenn die Anzahl von erfolglosen Übergaben auf eine voreingestellte erste Obergrenze ansteigt.

10. Netzwerkausrüstung nach Anspruch 8, wobei:
die Aktualisierungsvorrichtung (804) des Weiteren speziell dafür konfiguriert ist, das Triplet, auf dem die Übergabe basiert, zu löschen, wenn die Anzahl von erfolglosen Übergaben auf eine voreingestellte erste Obergrenze ansteigt, und die Anzahl von erfolgreichen Übergaben von einer voreingestellten zweiten Obergrenze aus auf null abnimmt.

11. Zellenübergabeverfahren, das Folgendes umfasst:
wenn ein Endgerät mit einem Rufabwurf konfrontiert ist, wenn das Endgerät aus einem Versorgungsbereich einer Quellenbasisstation zum ersten Mal in einen Versorgungsbereich einer Ziel-Femtozellen-Basisstation eintritt und sich bei der Ziel-Femtozellen-Basisstation anmeldet, oder wenn ein Endgerät mit einem Rufabwurf konfrontiert ist, wenn das Endgerät aus einem Versorgungsbereich einer Quellenbasisstation zum ersten Mal in einen Versorgungsbereich einer Ziel-Femtozellen-Basisstation eintritt und einen Dienst innerhalb der Versorgungsreichweite der Ziel-Femtozellen-Basisstation wiederherstellt, Senden (301), durch die Ziel-Femtozellen-Basisstation, von Informationen des Endgerätes und Informationen der Ziel-Femtozellen-Basisstation an eine Netzwerkausrüstung, so dass die Netzwerkausrüstung ein Triplet erstellt, das Informationen der Quellenbasisstation, die Informationen des Endgerätes und die Informationen der Ziel-Femtozellen-Basisstation umfasst;
Empfangen (302), durch die Ziel-Femtozellen-Basisstation, einer Übergabevorbereitungsnachricht, die durch die Netzwerkausrüstung gesendet wird, wobei die Übergabevorbereitungsnachricht durch die Netzwerkausrüstung gemäß den Informationen des Endgerätes, das eine Übergabe verlangt, und dem Triplet gesendet wird; und
Vorbereiten (303), durch die Ziel-Femtozellen-Basisstation gemäß der Übergabevorbereitungsnachricht, von Ressourcen für eine Übergabe, so dass das Endgerät von der Quellenbasisstation an die Ziel-Femtozellen-Basisstation übergeben wird.

12. Verfahren nach Anspruch 11, das des Weiteren Folgendes umfasst:
Senden, durch die Ziel-Femtozellen-Basisstation, einer Übergabeergebnisnachricht an die Netzwerkausrüstung, so dass die Netzwerkausrüstung gemäß der Übergabeergebnisnachricht das durch die Netzwerkausrüstung gespeicherte Triplet aktualisiert.

13. Femtozellen-Basisstation, die Folgendes umfasst:
eine Informationssendevorrichtung (901), die dafür konfiguriert ist: wenn ein Endgerät mit einem Rufabwurf konfrontiert ist, wenn das Endgerät aus einem Versorgungsbereich einer Quellenbasisstation zum ersten Mal in einen Versorgungsbereich einer Ziel-Femtozellen-Basisstation eintritt und sich bei der Femtozellen-Basisstation anmeldet, oder wenn ein Endgerät mit einem Rufabwurf konfrontiert ist, wenn das Endgerät aus einem Versorgungsbereich einer Quellenbasisstation zum ersten Mal in einen Versorgungsbereich einer Ziel-Femtozellen-Basisstation eintritt und einen Dienst innerhalb der Versorgungsreichweite der Femtozellen-Basisstation wiederherstellt, Informationen des Endgerätes und Informationen der Femtozellen-Basisstation an eine Netzwerkausrüstung zu senden, so dass die Netzwerkausrüstung ein Triplet erstellt, das Informationen der Quellenbasisstation, die Informationen des Endgerätes und die Informationen der Femtozellen-Basisstation umfasst; und
eine Übergabevorrichtung (902), die dafür konfiguriert ist, eine Übergabevorbereitungsnachricht zu empfangen, die durch die Netzwerkausrüstung gesendet wird, wobei die Übergabevorbereitungsnachricht durch die Netzwerkausrüstung gemäß den Informationen des Endgerätes, das eine Übergabe verlangt, und dem Triplet gesendet wird; und Ressourcen für die Übergabe gemäß der Übergabevorbereitungsnachricht vorzubereiten, so dass das Endgerät von der Quellenbasisstation zu der Femtozellen-Basisstation übergeben wird.

14. Femtozellen-Basisstation nach Anspruch 13, wobei:
die Informationssendevorrichtung des Weiteren dafür konfiguriert ist, eine Übergabeergebnisnachricht an die Netzwerkausrüstung zu senden, so dass die Netzwerkausrüstung gemäß der Übergabeergebnisnachricht das durch die Netzwerkausrüstung gespeicherte Triplet aktualisiert.

15. Zellenübergabesystem, das die Netzwerkausrüstung nach einem der Ansprüche 6 bis 10 und die Femtozellen-Basisstation nach Anspruch 13 oder 14 umfasst.

## Revendications

1. Procédé de transfert cellulaire, comprenant :
la réception (201), par un équipement réseau, d'une demande de transfert cellulaire envoyée par une station de base source, dans lequel la demande de transfert cellulaire comprend de l'information de la station de base source et de l'information d'un terminal demandant un transfert ;
la demande (202), par l'équipement réseau, d'un triplet comprenant une correspondance entre l'information de la station de base source, l'information du terminal et l'information d'une station de base femto-cellulaire cible, afin d'obtenir l'information de la station de base femto-cellulaire cible correspondant à l'information du terminal demandant le transfert ; et
l'instruction, par l'équipement réseau, pour que la station de base femto-cellulaire cible prépare des ressources pour le transfert, et l'envoi d'une instruction de transfert au terminal demandant le transfert de manière à ce que le terminal soit transféré à la station de base femto-cellulaire cible ;
**caractérisé en ce que** le triplet est généré par l'équipement réseau en fonction de l'information de la station de base source qui est obtenue par l'équipement réseau et en fonction de l'information du terminal et de l'information de la station de base femto-cellulaire cible qui sont envoyées par la station de base femto-cellulaire cible lorsque le terminal est confronté à une zone de couverture de la femto-cellule cible à partir d'une zone de couverture de la station de base source pour la première fois et est confronté à une interruption d'appel.

2. Procédé selon la revendication 1, dans lequel, lorsqu'il y a une pluralité de stations de base femto-cellulaires cibles correspondant à l'information de la station de base source et à l'information du terminal, l'instruction, par l'équipement réseau, pour que la station de base femto-cellulaire cible prépare des ressources pour le transfert, et l'envoi d'une instruction de transfert au terminal demandant le transfert comprend :
l'instruction pour que la pluralité des stations de base femto-cellulaires cibles préparent des ressources pour le transfert, et l'envoi de l'instruction de transfert au terminal demandant le transfert, dans lequel l'instruction de transfert comprend de l'information de la pluralité des stations de base femto-cellulaires cibles.

3. Procédé selon la revendication 1, comprenant en outre :
la réception, par l'équipement réseau, d'un résultat de transfert envoyé par la station de base femto-cellulaire cible ; et une mise à jour du triplet en fonction du résultat de transfert.

4. Procédé selon la revendication 3, dans lequel la mise à jour, par l'équipement réseau, du triplet en fonction du résultat de transfert, comprend :
la suppression du triplet sur lequel le transfert est basé lorsque le nombre d'échecs de transfert augmente jusqu'à une première limite supérieure préréglée.

5. Procédé selon la revendication 3, dans lequel la mise à jour, par l'équipement réseau, du triplet en fonction du résultat de transfert comprend en outre :
la suppression du triplet sur lequel le transfert est basé lorsque le nombre d'échecs de transfert augmente jusqu'à une première limite supérieure préréglée et que le nombre de succès de transfert diminue jusqu'à zéro par rapport à une deuxième limite supérieure préréglée.

6. Equipement réseau comprenant :
un dispositif de réception (801) configuré pour recevoir une demande de transfert cellulaire envoyée par un station de base source, dans lequel la demande de transfert comprend de l'information de la station de base source et de l'information d'un terminal demandant un transfert ;
un dispositif d'interrogation (802) configuré pour interroger un triplet comprenant une correspondance entre l'information de la station de base source, l'information du terminal, et l'information d'une station de base femto-cellulaire cible, afin d'obtenir l'information de la station de base femto-cellulaire cible correspondant à l'information du terminal demandant le transfert ; et
un dispositif d'envoi (803) configuré pour instruire la station de base femto-cellulaire cible de préparer des ressources pour le transfert, et envoyer une instruction de transfert au terminal demandant le transfert de manière à ce que le terminal soit transféré à la station de base femto-cellulaire cible correspondante ;
**caractérisé en ce que** le triplet est généré par l'équipement réseau en fonction de l'information de la station de base source qui est obtenue par l'équipement réseau et
en fonction de l'information du terminal et de l'information de la station de base femto-cellulaire cible qui sont envoyées par la station de base femto-cellulaire cible lorsque le terminal est confronté à une zone de couverture de la femto-cellule cible à partir d'une zone de couverture de la station de base source pour la première fois, et
est confronté à un interruption d'appel.

7. Equipement réseau selon la revendication 6, dans lequel, lorsqu'il y a une pluralité de stations de base femto-cellulaires cibles correspondant à l'information de la station de base source et à l'information du terminal,
le dispositif d'envoi (803) est spécifiquement configuré pour instruire la pluralité des stations de base femto-cellulaires cibles correspondantes de préparer des ressources pour le transfert et envoyer l'instruction de transfert au terminal demandant le transfert, dans lequel l'instruction de transfert comprend de l'information de la pluralité des stations de base femto-cellulaires cibles.

8. Equipement réseau selon la revendication 6, dans lequel :
le dispositif de réception (801) est en outre configuré pour recevoir un résultat de transfert envoyé par la station de base femto-cellulaire cible ; et
l'équipement réseau comprenant en outre : un dispositif de mise à jour (804) configuré pour mettre à jour le triplet en fonction du résultat de transfert.

9. Equipement réseau selon la revendication 8, dans lequel :
le dispositif de mise à jour (804) est spécifiquement configuré pour supprimer le triplet sur lequel est basé le transfert lorsque le nombre d'échecs de transfert augmente jusqu'à une première limite supérieure préréglée.

10. Equipement réseau selon la revendication 8, dans lequel :
le dispositif de mise à jour (804) est en outre spécifiquement configuré pour supprimer le triplet sur lequel est basé le transfert lorsque le nombre d'échecs de transfert augmente jusqu'à une première limite supérieure préréglée et que le nombre de succès de transfert diminue jusqu'à zéro par rapport à une deuxième limite supérieure préréglée.

11. Procédé de transfert cellulaire, comprenant :
si un terminal est confronté à une interruption d'appel lorsque le terminal entre dans une zone de couverture d'une station de base femto-cellulaire cible à partir d'une zone de couverture d'une station de base source pour la première fois et s'enregistre auprès de la station de base femto-cellulaire cible, ou si un terminal est confronté à une interruption d'appel lorsque le terminal entre dans une zone de couverture d'une station de base femto-cellulaire cible à partir d'une zone de couverture d'une station de base source pour la première fois et rétablit un service au sein d'une couverture de la station de base femto-cellulaire cible, l'envoi (301) par la station de base femto-cellulaire cible de l'information du terminal et de l'information de la station de base femto-cellulaire cible à un équipement réseau de manière à ce que l'équipement réseau construise un triplet comprenant de l'information de la station de base source,
de l'information du terminal, et de l'information de la station de base femto-cellulaire cible ;
la réception (302), par la station de base femto-cellulaire cible, d'un message de préparation de transfert envoyé par l'équipement réseau, dans lequel le message de préparation de transfert est envoyé par l'équipement réseau en fonction de l'information du terminal demandant un transfert et du triplet ; et
la préparation (303), par la station de base femto-cellulaire cible en fonction du message de préparation de transfert, de ressources pour le transfert de manière à ce que le terminal soit transféré de la station de base source à la station de base femto-cellulaire cible.

12. Procédé selon la revendication 11, comprenant en outre :
l'envoi, par la station de base femto-cellulaire cible, d'un message de résultat de transfert à l'équipement réseau de manière à ce que l'équipement réseau mette à jour, en fonction du message de résultat de transfert, le triplet stocké par l'équipement réseau.

13. Station de base femto-cellulaire comprenant :
un dispositif d'envoi d'informations (901) configuré pour : si un terminal est confronté à une interruption d'appel lorsque le terminal entre dans une zone de couverture d'une station de base femto-cellulaire cible à partir d'une zone de couverture d'une station de base source pour le première fois et s'enregistre auprès de la station de base femto-cellulaire, ou si un terminal est confronté à une interruption d'appel lorsque le terminal entre dans une zone de couverture d'une station de base femto-cellulaire cible à partir d'une zone de couverture d'une station de base source pour la première fois rétablit un service au sein de la couverture de la station de base femto-cellulaire, envoyer de l'information du terminal et de l'information de la station de base femto-cellulaire à un équipement réseau de manière à ce que l'équipement réseau construise un triplet comprenant de l'information de la station de base source, de l'information du terminal, et de l'information de la station de base femto-cellulaire ; et
un dispositif de transfert (902) configuré pour : recevoir un message de préparation de transfert envoyé par l'équipement réseau, dans lequel le message de préparation de transfert est envoyé par l'équipement réseau en fonction de l'information du terminal demandant le transfert et du triplet ; et préparer des ressources pour le transfert en fonction du message de préparation de transfert de manière à ce que le terminal soit transféré de la station de base source à la station de base femto-cellulaire.

14. Station de base femto-cellulaire selon la revendication 13, dans laquelle :
le dispositif d'envoi d'informations est en outre configuré pour envoyer un message de résultat de transfert à l'équipement réseau de manière à ce que l'équipement réseau mette à jour, en fonction du message de résultat de transfert, le triplet stocké par l'équipement réseau.

15. Système de transfert cellulaire comprenant: l'équipement réseau selon l'une quelconque des revendications 6 à 10 et la station de base femto-cellulaire selon la revendication 13 ou 14.
